# DEMANDE DE BREVET EUROPEEN

(11) **EP 0 605 288 A1**
(43) Date de publication de la demande: **06.07.1994**
(21) Numéro de dépôt: 93403116.2
(22) Date de dépôt: 21.12.1993
(51) Int. Cl.: A47L 15/42, D06F 39/00, B01J 49/00, C02F 1/42

(54) **Perfectionnement aux machines à laver utilisant de l'eau adoucie**

(30) Priorité: 30.12.1992 FR 9215914
(71) Demandeur: ESSWEIN S.A., F-85002 La Roche-sur-Yon (FR)
(72) Inventeur: Flork, Michel, F-92402 Courbevoie Cedex (FR); Barbier, Camille, F-92402 Courbevoie Cedex (FR)
(74) Mandataire: Chaverneff, Vladimir

(57) **Abrégé**

La présente invention concerne une machine à laver du type comportant au moins un dispositif de traitement du flux liquide 13 du type absorbant régénérable par un champ électrique. Le dispositif de traitement est connecté sur un circuit de recyclage de l'eau à l'intérieur de la machine à laver au moyen d'une conduite d'alimentation 20 provenant d'une pompe de recyclage et d'une conduite d'évacuation 11 amenant l'eau traitée en un point quelconque de la cuve 1.

Application en particulier aux lave-vaisselle.

## Description

La présente invention concerne un perfectionnement aux machines à laver, plus particulièrement mais non exclusivement, un perfectionnement aux lave-vaisselle. Toutefois, ce perfectionnement peut aussi s'appliquer aux lave-linge utilisant de l'eau adoucie ou nécessitant une eau pure en fin de rinçage.

Actuellement, dans les lave-vaisselle et parfois les lave-linge, on utilise des dispositifs d'adoucissement d'eau. Ces dispositifs ont pour objet d'éliminer la plus grande partie du calcium (calcaire) et du magnésium contenus dans les eaux du réseau alimentant les machines. Ces dispositifs d'adoucissement sont constitués, de manière connue, par des résines échangeuses d'ions qui ont la propriété de capter les cations, notamment les ions calcium et magnésium dont on veut débarrasser les eaux d'alimentation de la machine. Les résines utilisées sont bloquées en ions sodium et, dans ces conditions, elles échangent les ions sodium contre les ions calcium et magnésium présents dans la solution. Toutefois, quand ces résines sont saturées en calcium et/ou en magnésium, elles perdent leur capacité d'adoucissement et doivent être regénérées. De manière connue, cette régénération s'effectue en imbibant les résines d'une solution dont les ions vont prendre la place des ions calcium et/ou magnésium des résines saturées. La solution utilisée dans les lave-vaisselle est une solution de chlorure de sodium. Dans ce cas, le sodium vient se substituer au calcium et/ou magnésium et les résines peuvent être à nouveau réutilisées. Dans les lave-vaisselle connus, il est donc nécessaire de recharger périodiquement la machine en chlorure de sodium pour pouvoir réaliser la régénération des résines d'adoucissement d'eau. Ceci est une contrainte pour l'utilisateur. D'autre part, l'utilisation d'un sel tel que le chlorure de sodium présente un certain nombre d'inconvénients. Pour retrouver l'efficacité d'origine des résines, le chlorure de sodium est utilisé en excès. Il en résulte des risques de corrosion de certains matériaux utilisés dans la construction des lave-vaisselle et des lave-linge, des risques de dépôts sur la vaisselle traitée en lave-vaisselle, dépôts pouvant nuire à l'aspect de la vaisselle mais également à la santé des personnes soumises à un régime sans sel strict. Les risques de corrosion sont actuellement limités en utilisant des matériaux résistants tels les aciers inoxydables et en évitant tout contact du sel avec les matériaux sensibles. Les dépôts de sels sont, quant à eux, limités par l'effet du produit de rinçage dont la mise en oeuvre constitue une autre contrainte pour les constructeurs et les usagers.

Afin de supprimer les contraintes et inconvénients que présente l'utilisation du chlorure de sodium pour régénérer les résines habituellement utilisées dans les lave-vaisselle et éventuellement les lave-linge, on a proposé, dans la demande de brevet français N° 92 10570 au nom de la Société ESSWEIN S.A., d'effectuer la régénération au moyen d'un champ électrique. Dans ce brevet, on prévoit dans le circuit d'alimentation en flux liquide un dispositif de traitement du flux liquide du type absorbant régénérable par un champ électrique. Ceci permet d'obtenir une eau adoucie.

La présente invention a pour but de proposer une nouvelle connexion du dispositif de traitement du flux liquide qui permette de réaliser une recirculation de l'eau.

En conséquence, la présente invention a pour objet une machine à laver du type comportant au moins un dispositif de traitement du flux liquide du type absorbant régénérable par un champ électrique, caractérisée en ce que le dispositif de traitement en flux liquide est connecté sur le circuit de recyclage de l'eau à l'intérieur de la machine à laver au moyen d'un conduit d'alimentation provenant d'une pompe de recyclage ou d'une dérivation du circuit de recyclage existant et d'un conduit d'évacuation amenant l'eau traitée en un point quelconque de la cuve de la machine à laver.

La régénération électrique permet l'utilisation de mélanges de résines cationiques et anioniques soit en lits mélangés, soit en lits séparés et/ou de résines complexantes et/ou de résines amphotères et/ou d'absorbants dont la régénération trop complexe voire impossible jusqu'à ce jour ne rendait pas possible leur utilisation dans les lave-vaisselle et les lave-linge. L'intérêt de ces résines réside dans les meilleures performances obtenues. Notamment avec le montage décrit ci-dessus, il est possible de diminuer la quantité de résine nécessaire et/ou d'obtenir une eau dont la pureté très poussée permet de diminuer voire de supprimer l'utilisation de produits de rinçage dans les lave vaisselle, de supprimer l'utilisation de produits assouplissants dans les lave-linge et/ou de diminuer considérablement les consommations d'eau des lave-vaisselle et des lave-linge.

Selon un mode de réalisation utilisé, notamment dans les lave-vaisselle, le dispositif de traitement du flux liquide est constitué par une colonne d'absorption de forme parallélépipédique et d'épaisseur suffisamment faible pour être logée entre la cuve et le panneau d'habillage du lave-vaisselle. La colonne contient des résines et/ou absorbants et au moins une paire d'électrodes parallèles reliées à une alimentation en tension continue et situées de part et d'autre desdites résines et/ou absorbants.

Selon un mode de réalisation préférentiel, le dispositif est constitué par une colonne de forme cylindrique destinée à être logée sous la cuve du lave-vaisselle ou de lave-linge.

La colonne contient au moins une paire d'électrodes en forme de fils reliés à une alimentation en tension continue et plongés dans les résines et/ou absorbants. De préférence, les fils sont montés à l'intérieur de tubes en matériaux poreux.

La résine ou absorbant utilisée est constituée par une résine cationique ou un mélange de résines cationiques dont le rôle est d'éliminer les ions calcium et/ou magnésium se trouvant dans l'eau du réseau de manière à obtenir une eau adoucie. De préférence, l'absorbant est constitué de résines choisies parmi les résines cationiques, anioniques, complexantes amphotères et/ou les absorbants tels que le charbon. Ces résines ou absorbants sont contenus dans la colonne d'absorption en lits mélangés ou peuvent être utilisés en lits séparés. L'utilisation de lits mélangés permet de fixer simultanément les anions et les cations.

La présente invention a aussi pour objet un procédé de fonctionnement d'une machine à laver telle que décrite ci-dessus. Le procédé comporte les étapes suivantes :
- alimentation de la cuve en eau du réseau ;
- recyclage de l'eau se trouvant dans la cuve avec passage de l'eau sur le dispositif de traitement du flux liquide ;
- introduction du détergent ;
- cycle(s) de lavage ;
- en fin du dernier cycle, recyclage de l'eau de lavage avec passage sur le dispositif de traitement du flux liquide, cette eau étant renvoyée dans la cuve pour le rinçage.

Dans ce cas, de préférence une première régénération a lieu à la fin du cycle de lavage et/ou de prélavage, et au moins une seconde régénération à la fin du ou des cycles de rinçage.

La présente invention concerne aussi une machine à laver dans laquelle le dispositif de traitement du flux liquide est connecté indifféremment entre l'arrivée d'eau du réseau d'alimentation et la cuve de la machine à laver d'une part et dans le circuit de recyclage de l'eau à l'intérieur de la machine à laver d'autre part.

Dans ce cas, la machine à laver fonctionne selon les étapes suivantes :
- alimentation en flux liquide à travers le dispositif de traitement du flux liquide ;
- introduction du détergent ;
- cycle(s) de lavage ;
- en fin du dernier cycle, recyclage de l'eau de lavage avec passage sur le dispositif de traitement du flux liquide, cette eau étant renvoyée dans la cuve pour le rinçage.

Dans ce cas, la ou les régénérations ont lieu comme dans le procédé de fonctionnement décrit ci-dessus, une régénération pouvant être effectuée à la fin de la phase d'alimentation en flux liquide.

D'autres avantages de la présente invention apparaîtront à la lecture de la description de différents modes de réalisation préférentiels, cette description étant faite avec référence aux dessins ci-annexés dans lesquels :
- la figure 1 est une vue en coupe schématique d'un premier mode de réalisation d'un lave-vaisselle muni d'un dispositif de traitement d'un flux liquide monté conformément à un premier mode de réalisation de la présente invention.
- la figure 2 est une vue en coupe partielle montrant un second mode de connexion du dispositif de traitement d'un flux liquide conforme à la présente invention et,
- les figures 3A et 3B sont respectivement une vue en coupe verticale et une vue en coupe par A-A d'un autre mode de réalisation du dispositif de traitement d'un flux liquide.

Pour simplifier la description, dans les figures, les mêmes éléments portent les mêmes références.

D'autre part, dans la suite de la description, par "absorbant", on entend les absorbants de tous types capables de fixer les molécules et les ions tels que les résines échangeuses d'ions tant anioniques que cationiques ou non ioniques, les résines complexantes ou amphotères ainsi que les absorbants tels que les charbons. Par "régénération", on entend que l'absorbant partiellement ou totalement saturé est traité pour retrouver une capacité de fixation sensiblement égale à sa capacité initiale. Par "flux liquide", l'on entend tout type d'eau tel que l'eau du réseau ou une eau chargée en détergent ou en un autre produit liquide.

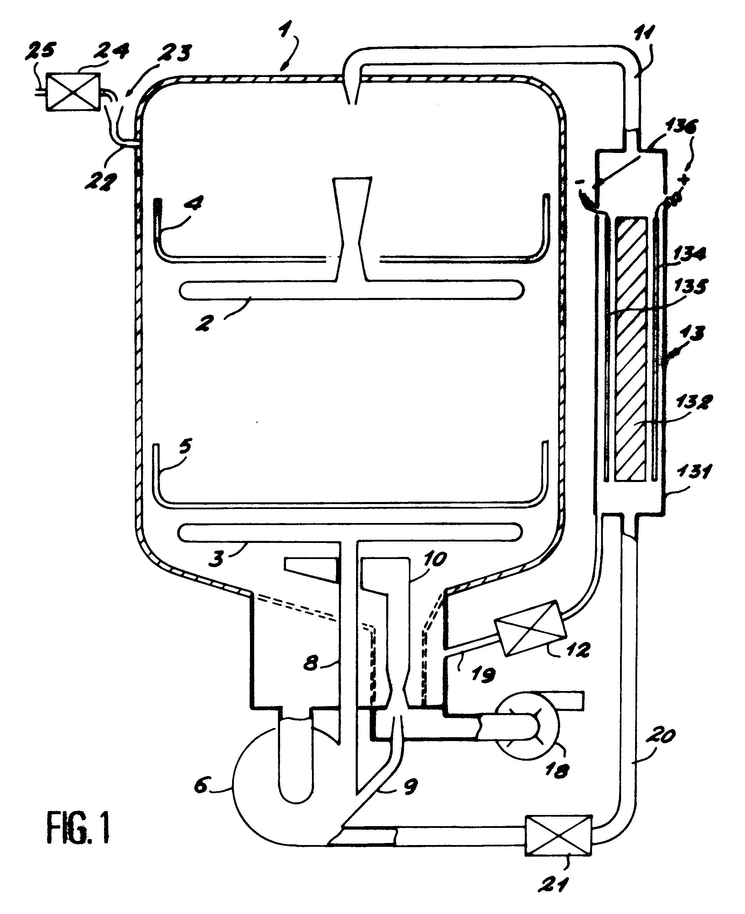

Sur la figure 1, on a donc représenté schématiquement un lave-vaisselle muni d'un dispositif de traitement de l'eau conforme à la présente invention. De manière connue, le lave-vaisselle comporte une cuve 1, un bras supérieur 2 d'alimentation en eau et un bras inférieur 3 d'alimentation en eau. Il comporte de plus un panier supérieur 4 prévu au-dessus du bras 2 et un panier inférieur 5 prévu au-dessus du bras 3. D'autre part, la cuve est connectée, en partie basse, à un dispositif de répartition d'eau 6 qui permet de ramener l'eau en différents endroits de la cuve 1. Ainsi, la conduite 8 renvoie l'eau à travers le bras 3 tandis que la conduite 9 renvoie l'eau vers le dispositif de microfiltration 10 prévu en-dessous du bras 3. De manière connue, une pompe d'évacuation 18 est prévue en-dessous de la cuve 1. Conformément à la présente invention, un dispositif de traitement de l'eau 13 est connecté de manière à fonctionner en recyclage de l'eau issue du lave-vaisselle lui-même. Pour ce faire, à partir du dispositif de répartition 6 est connectée une conduite 20 qui débouche dans le dispositif de traitement 13 avec interposition d'une vanne 21. De plus, le dispositif 13 est connecté en partie basse de la machine près de la pompe d'évacuation 18 par une conduite 19 avec interposition d'une vanne 12. L'eau régénérée par le dispositif 13 est envoyée dans la cuve 1 de la machine à laver par l'intermédiaire de la conduite 11 qui peut arriver, comme dans le mode de réalisation représenté, dans la partie haute du lave-vaisselle au-dessus du bras 2 ou en toute autre partie. Dans ce mode de réalisation, l'alimentation en eau est réalisée en partie haute du lave-vaisselle, comme représenté sur la figure 1, par la conduite 22, le dispositif anti-retour 23, la vanne d'arrivée d'eau 24 et le réseau référencé 25.

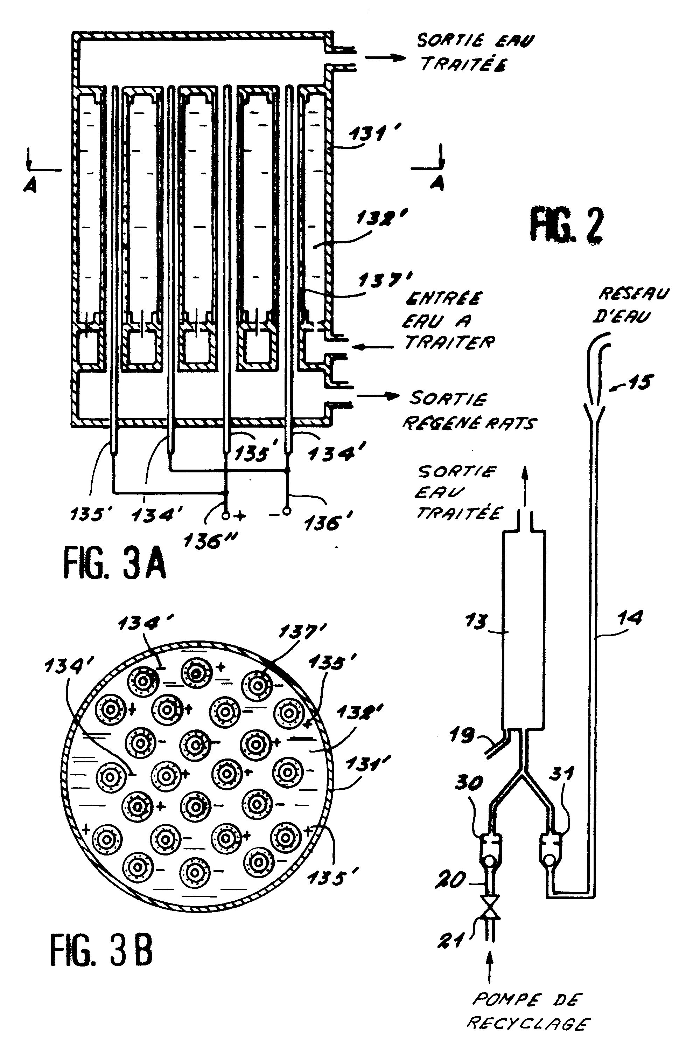

On décrira maintenant, de manière plus détaillée, le dispositif de traitement de l'eau référencé 13. Ce dispositif est constitué d'une colonne d'absorption 131 qui est en fait un récipient de toute forme adaptée, notamment de forme cylindrique ou parallélépipédique, renfermant une certaine quantité d'absorbant 132. Dans le mode de réalisation représenté sur la figure 1, la colonne d'absorption est constituée par un récipient de forme parallélépipédique de faible épaisseur prévu entre la cuve et l'habillage de la machine à laver. Selon un autre mode de réalisation, cette colonne peut être située sous la cuve de la machine. Dans ce cas, cette colonne est constituée par un élément cylindrique tel que représenté sur les figures 3A et 3B qui sera décrit de manière plus détaillée ci-après. Conformément à la présente invention, l'absorbant 132 peut être constitué uniquement par une résine cationique telle qu'une résine sulfonique, une résine carboxylique, une résine phénolique ou une résine phosphorique dont le rôle est de fixer notamment les ions calcium. Selon un autre mode de réalisation l'absorbant 132 est constitué par au moins une résine cationique et au moins une résine anionique en lits mélangés. Toutefois, l'absorbant peut être constitué par des résines en lits séparés prévues dans des colonnes différentes. La résine anionique est choisie de préférence parmi les amines primaires, secondaires, tertiaires ou les ammoniums quaternaires. De préférence, d'autres types d'absorbants peuvent aussi être utilisés, notamment des résines amphotères et/ou complexantes choisies parmi les résines aminodiacétiques ou aminophosphoniques et des absorbants choisis parmi les résines amines faibles, les résines carboxyliques faibles, les charbons végétaux et animaux, la silice, l'alumine ou les zéolites. Conformément à la présente invention, à l'intérieur de la colonne 131 sont montées deux électrodes 134, 135 de manière à pouvoir appliquer sur la résine un champ électrique lors de la régénération. Les électrodes peuvent être de toute nature appropriée mais elles sont réalisées, de préférence, en graphite ou en acier inoxydable. Les deux électrodes peuvent être réalisées dans le même matériau ou éventuellement chacune en un matériau différent. On choisira de préférence le matériau le moins coûteux pour réaliser les électrodes. D'autre part, la disposition des électrodes dans la colonne d'absorption est telle que, de préférence, la totalité de l'absorbant soit soumis au champ électrique lorsque le courant passe dans le circuit. Elles peuvent avoir toutes formes appropriées. Elles peuvent être, par exemple, constituées par des plaques parallèles prévues de chaque côté de l'absorbant ou des fils plongeant dans l'absorbant. Comme représenté sur la figure 1, les électrodes 134 et 135 sont connectées à des fils électriques 136 reliés à un générateur de tension continue comme suggéré par les signes - et + prévus aux extrémités des fils électriques 136. D'autre part, l'absorbant 132 ne remplit pas complètement la colonne 131, ce qui permet d'avoir en partie haute 133 un réservoir d'eau. Dans le mode de réalisation représenté, la colonne d'absorption est alimentée en partie basse par l'eau provenant de la machine à laver, l'eau régénérée étant évacuée soit par la conduite 11 soit par la conduite 19 lorsque la vanne 12 est ouverte pour évacuer les déchets issus de la régénération.

On décrira maintenant le mode de fonctionnement de ce type de lave-vaisselle. Tout d'abord l'eau est alimentée dans la cuve 1 à partir du réseau en suivant la conduite 22. Elle se répartit dans le fond de la cuve 1 conformément au principe usuel. Comme cette eau n'a pas été adoucie, on commence par lui faire subir un recyclage, c'est-à-dire que les vannes 12 et 24 sont fermées tandis que la vanne 21 est ouverte. L'eau est envoyée par la conduite 20 dans le dispositif de traitement d'eau 13 avant d'être injectée par la conduite 11 dans la cuve. Une fois cette eau traitée, on peut réaliser le cycle de lavage ou de prélavage en incorporant dans l'eau le détergent et en faisant fonctionner la machine de la manière habituelle, les vannes 24, 12 et 21 étant fermées. A la fin du cycle de lavage, on ouvre la vanne 21 et l'on évacue l'eau de lavage associée aux détergents et aux salissures en solution à travers le dispositif de traitement d'eau 13. Ce dispositif réalise une purification sans addition complémentaire de l'eau qui est réinjectée par la conduite 11 dans la cuve 1 où elle est, à nouveau, utilisée pour réaliser le rinçage de la vaisselle. Pendant tout le cycle de rinçage, la vanne 21 est ouverte de telle sorte que l'on réalise en continu un traitement de l'eau qui, une fois purifiée, est réinjectée dans le lave-vaisselle. Il est ainsi possible de réaliser un cycle complet lavage et rinçage en utilisant sensiblement la même quantité d'eau, à savoir une quantité d'eau divisée par au moins 3 par rapport à un cycle conventionnel. Une fois le rinçage terminé, on ferme la vanne 21. Simultanément, on applique sur les électrodes 134, 135 une tension d'alimentation continue et l'on ouvre la vanne 12 de telle sorte que les déchets issus de la régénération sont évacués par la conduite 19 vers la pompe d'évacuation 18 qui vient d'être mise en oeuvre. De ce fait, on élimine l'eau et les déchets issus de la régénération à l'extérieur du lave-vaisselle en fin de cycle. Il est aussi possible d'effectuer une première régénération à la fin du cycle de lavage en fermant momentanément la vanne 21 et en ouvrant la vanne 12. Ceci entraîne une petite perte d'eau qui peut être compensée par un apport d'eau du réseau qui sera traitée en continu puisque, lors du rinçage, on effectue un recyclage en continu de l'eau.

Selon un autre mode de réalisation représenté sur la figure 2, le dispositif de traitement 13 est aussi relié au réseau d'alimentation en eau. Dans ce cas, I'arrivée d'eau en provenance du réseau est réalisée par la conduite 14 qui est connectée en partie basse du dispositif de traitement d'eau 13. La conduite 14 est munie d'un dispositif anti-retour 15. Dans la conduite 14 est interposé un clapet 31 dont le rôle est d'empêcher l'évacuation de l'eau traitée durant le recyclage par le système anti-retour 15. D'autre part, le dispositif de traitement en flux liquide 13 est connecté à la cuve près de la pompe de recyclage par une conduite 10 munie d'une vanne 21 de la manière représentée sur la figure 1. Toutefois, dans la conduite 19 est aussi interposé un clapet 30 destiné à empêcher le passage direct de l'eau d'alimentation dans la cuve. Comme dans le mode de réalisation de la figure 1, le dispositif de traitement d'eau est connecté à la cuve 1 par la canalisation 11 permettant la sortie de l'eau traitée et par la conduite 19 permettant l'évacuation des déchets issus de la régénération.

Ce nouveau type de dispositif fonctionne de la manière suivante. L'eau du réseau est introduite par l'intermédiaire du dispositif anti-retour 15, de la canalisation 14 et du clapet 31 au travers du système de traitement 13 avant d'être injectée par la canalisation 11 en un point quelconque du lave-vaisselle. Le détergent est ensuite introduit et le cycle de lavage et/ou de prélavage est effectué. En fin de cycle de la lavage, le système de recyclage envoie l'eau en continu au travers du dispositif de traitement 13 à travers la canalisation 20, la vanne 21 et le clapet 30. La vaisselle est ainsi rincée avec une eau purifiée sans additif complémentaire.

On décrira maintenant avec référence aux figures 3A et 3B un autre mode de réalisation du dispositif de traitement en flux liquide 13. Dans ce cas, le dispositif de traitement en flux liquide est constitué par une colonne cylindrique 131' renfermant une certaine quantité d'absorbant 132' tel que décrit ci-dessus. Conformément au mode de réalisation représenté, les électrodes 134' et 135' sont constituées par une multitude de fils noyés dans des tubes cylindriques 137' en matériaux poreux qui sont répartis dans toute la masse de l'absorbant, comme représenté clairement sur la figure 3B. Les électrodes 134' sont reliées entre elles par l'intermédiaire de fils 136' et sont connectées à la borne - d'une alimentation en tension continue non représentée tandis que l'ensemble des électrodes 135' sont reliées entre elles par des fils 136'' connectés à la borne + de ladite alimentation. La répartition des électrodes dans l'absorbant est réalisée de manière à obtenir un champ électrique le plus uniforme possible lors de la régénération. Comme représenté sur la figure 3A, la colonne 131' est munie d'orifices pour recevoir l'eau à traiter et pour évacuer l'eau traitée ou les déchets issus de la régénération.

## Revendications

1. Machine à laver du type comportant au moins un dispositif de traitement du flux liquide (13) du type absorbant régénérable par un champ électrique, caractérisée par le fait que le dispositif de traitement en flux liquide est connecté sur un circuit de recyclage de l'eau à l'intérieur de la machine à laver au moyen d'une conduite d'alimentation (20) provenant d'une pompe de recyclage ou d'une dérivation du circuit de recyclage existant et d'une conduite d'évacuation (11) amenant l'eau traitée en un point quelconque de la cuve (1) de la machine à laver.

2. Machine à laver selon la revendication 1, caractérisée par le fait que le dispositif de traitement du flux liquide est connecté indifféremment entre l'arrivée d'eau du réseau d'alimentation (14, 15) et la cuve (1) de la machine à laver d'une part et dans le circuit de recyclage de l'eau (20, 11) à l'intérieur de la machine à laver d'autre part.

3. Machine à laver selon l'une quelconque des revendications 1 et 2, caractérisée par le fait que le dispositif de traitement du flux liquide est constitué par au moins une colonne d'absorption, un absorbant et une paire d'électrodes prévues de part et d'autre de l'absorbant et reliées à une alimentation en tension continue, ladite colonne étant connectée à des conduites d'alimentation et d'évacuation du flux liquide.

4. Machine à laver selon la revendication 3, caractérisée par le fait que le dispositif de traitement du flux liquide est constitué par au moins une colonne d'absorption (131) située entre la cuve et le panneau d'habillage.

5. Machine à laver selon la revendication 3, caractérisée par le fait que le dispositif de traitement du flux liquide est constitué par au moins une colonne d'absorption (131') de forme cylindrique située sous la cuve de la machine.

6. Machine à laver selon l'une quelconque des revendications 1 à 5, caractérisée par le fait que l'absorbant est constitué par des résines choisies parmi les résines cationiques, anioniques, non-ioniques, complexantes, et/ou amphotères et par tout absorbant en lits séparés ou en lits mélangés.

7. Machine à laver selon l'une quelconque des revendications 1 à 6, caractérisée par le fait que la résine cationique est choisie parmi les résines sulfoniques, carboxyliques, phénoliques et phosphoniques.

8. Machine à laver selon l'une quelconque des revendications 1 à 7, caractérisée par le fait que la résine anionique est choisie parmi les amines primaires, secondaires ou tertiaires ou les ammoniums quaternaires.

9. Machine à laver selon l'une quelconque des revendications 1 à 7, caractérisée par le fait que la résine amphotère et/ou complexante est choisie parmi les résines amino-diacétiques ou amino-phosphoniques.

10. Machine à laver selon l'une quelconque des revendications 1 à 7, caractérisée par le fait que l'absorbant est choisi parmi les résines amines faibles, les résines carboxyliques faibles, les charbons végétaux et animaux, la silice, l'alumine ou les zéolites.

11. Procédé de fonctionnement d'une machine selon la revendication 1, caractérisé par le fait qu'il comporte les étapes suivantes :
- alimentation de la cuve en eau du réseau ;
- recyclage de l'eau se trouvant dans la cuve avec passage de l'eau sur le dispositif de traitement du flux liquide ;
- introduction du produit détergent ;
- cycle(s) de lavage ;
- en fin de cycle, recyclage de l'eau de lavage avec passage sur le dispositif de traitement du flux liquide, cette eau étant renvoyée dans la cuve pour le rinçage.

12. Procédé selon la revendication 11, caractérisé par le fait qu'une première régénération a lieu à la fin du cycle de lavage et/ou de prélavage et au moins une seconde régénération à la fin du ou des cycles de rinçage.

13. Procédé de fonctionnement d'une machine selon la revendication 2, caractérisé par le fait qu'il comporte les étapes suivantes :
- alimentation de la cuve en eau du réseau avec passage de l'eau au travers du dispositif de traitement du flux liquide ;
- introduction du produit détergent ;
- cycle(s) de lavage ;
- en fin de cycle, recyclage de l'eau de lavage avec passage sur le dispositif de traitement du flux liquide, cette eau étant renvoyée dans la cuve pour le rinçage.

14. Procédé selon la revendication 13, caractérisé par le fait qu'une première régénération a lieu à la fin de la période d'introduction d'eau et au moins une seconde régénération à la fin du ou des cycles de rinçage.
